Europäisches Patentamt

European Patent Office

Office européen des brevets

(11) Veröffentlichungsnummer: **0 477 412 A1**

# EUROPÄISCHE PATENTANMELDUNG

(21) Anmeldenummer: **90118609.8**

(22) Anmeldetag: **27.09.90**

(51) Int. Cl.5: **G05B 19/407**

(43) Veröffentlichungstag der Anmeldung:
**01.04.92 Patentblatt 92/14**

(84) Benannte Vertragsstaaten:
**CH DE ES FR GB IT LI SE**

(71) Anmelder: **SIEMENS AKTIENGESELLSCHAFT**
**Wittelsbacherplatz 2**
**W-8000 München 2(DE)**

(72) Erfinder: **Hoos, Gerd, Dipl.-Ing.**
**Schleienweg 7**
**W-8520 Erlangen(DE)**

(54) Verfahren zur Filterung digitaler Signale.

(57) Digitale Signale V(K), wie sie beispielsweise zur numerischen Steuerung von Werkzeugmaschinen- oder Roboterachsen verwendet werden, lassen sich mittels digitaler Filter (F) glätten, so daß Stoßbeanspruchungen der Achsen vermieden werden. Dabei sollen während einer Achsbewegung für unterschiedliche Belastungen der Achse unterschiedliche Filterlängen (N') einstellbar sein. Dies wird dadurch erreicht, daß das Filter (F) mit modifizierten diskontinuierlichen Signalen V'(K) besetzt wird, deren Wert aus der doppelten Signaldifferenz (D), dividiert durch die um den Faktor "Eins" reduzierte, geänderte Filterlänge (N'), ermittelt wird.

FIG 2

EP 0 477 412 A1

Mit digitalen Filtern können Folgen von digitalen Signalen geglättet werden. Zur Steuerung von Werkzeugmaschinen oder Robotern werden die von einer numerischen Steuerung berechneten diskontinuierlichen bzw. digitalen Geschwindigkeitssollwerte durch ein digitales Mittelwertfilter geglättet um Stoßbeanspruchungen der angetriebenen Achsen zu vermeiden. Die Güte der Glättung hängt dabei von der Filterlänge, d.h. von der Anzahl der Geschwindigkeitswerte über die gemittelt wird, ab.

Für unterschiedliche Betriebszustände einer zu steuernden Werzeugmaschinen- bzw. Roboterachse, kann es wünschenswert sein, unterschiedliche Filterlängen einzustellen. Eine Bahnbewegung eines Roboters verlangt beispielsweise eine bessere Glättung und damit eine größere Filterlänge als eine Punkt zu Punkt Bewegung. Mit herkömmlichen Verfahren ist es bisher möglich, eine Änderung einer aktuellen Filterlänge beim Stillstand einer numerisch gesteuerten Maschine durchzuführen. Dazu wird die Anzahl der im Filter bisher gespeicherten Geschwindigkeitswerte über Gewichtsfunktionen in neue Geschwindigkeitswerte umgerechnet, deren Anzahl von der Anzahl der bisherigen Geschwindigkeitswerte unterschieden ist, d.h. es wird eine Kompression oder eine Dehnung der durch die bisherigen Geschwindigkeitswerte gegebenen Kurve erreicht.

Die Umrechnung der Geschwindigkeitswerte ist jedoch sehr zeitaufwendig und läßt sich nicht unter Echtzeitbedingungen durchführen.

Es ist daher Aufgabe der Erfindung die Umschaltung der Filterlänge eines digitalen Filters im Echtzeitbetrieb zu ermöglichen.

Diese Aufgabe wird durch ein Verfahren zur Filterung einer Folge von digitalen Eingangssignalen gelöst, wobei in einem Filter eine vorgebbare, der Filterlänge entsprechende Anzahl von Eingangssignalen speicherbar ist, wobei ein Ausgangssignal des Filters aus der Summe der gespeicherten Eingangssignale, dividiert durch die Filterlänge, erzeugt wird und wobei jeweils die Signaldifferenz der Eingangssignale und der Ausgangssignale gebildet wird, mit folgenden weiteren Verfahrensschritten:

a) In einem Speichermittel wird die jeweilige Signaldifferenz gespeichert,

b) bei einer jeweiligen vorgebbaren Änderung der Filterlänge werden im Filter modifizierte digitale Signale von jeweils gleichem Wert gespeichert, deren Anzahl der geänderten Filterlänge entspricht,

c) der Wert der modifizierten digitalen Signale wird aus der doppelten Signaldifferenz, dividiert durch die um den Faktor "Eins" reduzierte geänderte Filterlänge, ermittelt.

Die Berechnung des Werts der modifizierten diskontinuierlichen Signale mit denen das digitale Filter bei einer Umschaltung der Filterlänge vorzubesetzen ist, erfordert einen sehr geringen rechnerischen Aufwand, so daß eine Umschaltung während des Betriebs einer Werkzeugmaschine, eines Roboters oder einer anderen Maschine möglich ist.

Vorzugsweise wird bei einer Änderung der Filterlänge des Filters jeweils der ganzzahlige Anteil der modifizierten digitalen Signale gespeichert, wobei eine dadurch bedingte zusätzliche Signaldifferenz auf den Eingang des Filters gegeben wird. Damit werden zwangsläufig auftretende Rundungsfehler kompensiert.

Die Berechnung der zusätzlichen Signaldifferenz erfordert eine Division durch den Faktor zwei, so daß sich eine weitere vorteilhafte Ausführungsform ergibt, wenn auf den ganzzahligen Anteil der modifizierten digitalen Signalen eine Modulo-Operation zur Basis 2 angewendet wird. Dadurch läßt sich die Division durch den Faktor 2 mit einer einfachen Shift-Operation erreichen.

Eine weitere vorteilhafte Ausbildung der Erfindung ist dadurch gekennzeichnet, daß eine Änderung von einer aktuellen Filterlänge auf eine neue Filterlänge schrittweise erfolgt. Dadurch wird ein zu großer Sprung zwischen zwei aufeinanderfolgenden, gefilterten Signalen vermieden, der zu einer Überbelastung einer zu steuernden Maschinenachse führen könnte.

Eine zu große Differenz zwischen zwei aufeinderfolgenden, gefilterten Signalen kann aber auch bereits bei einer gringfügigen Änderung der Filterlänge entstehen. Nach einer weiteren vorteilhaften Ausführungsform der Erfindung wird deshalb eine aktuelle Filterlänge beibehalten, wenn die Differenz bei einer vorgegebenen Änderung der Filterlänge einen vorgegebenen Wert überschreitet.

Bei einer nicht beabsichtigten Änderung der Filterlänge kann es vorkommen, daß die Differenz von zwei aufeinanderfolgenden Ausgangssignalen des Filters so groß ist, daß es zu einer starken mechanischen Beanspruchung einer Arbeitsmaschine kommt. In diesem Fall kann nach einer weiteren vorteilhaften Ausbildung der Erfindung die Filterlänge trotzdem geändert werden, so daß die Differenz einen vorgegebenen Wert nicht überschreitet.

Ein Ausführungsbeispiel der Erfindung wird anhand der Zeichnung näher erläutert. Dabei zeigen:

FIG 1          ein Blockschaltbild mit einem Interpolator und einem digitalen Filter

FIG 2          ein Signalflußdiagramm einer Filterung von digitalen Signalen

FIG 3 und FIG 4       ein Signalflußdiagramm einer digitalen Filterung mit Rückspeisung einer Signaldifferenz

FIG 5 bis FIG 9       Signalflußdiagramme zu einer sukzessiven Umschaltung der Filterlänge.

2

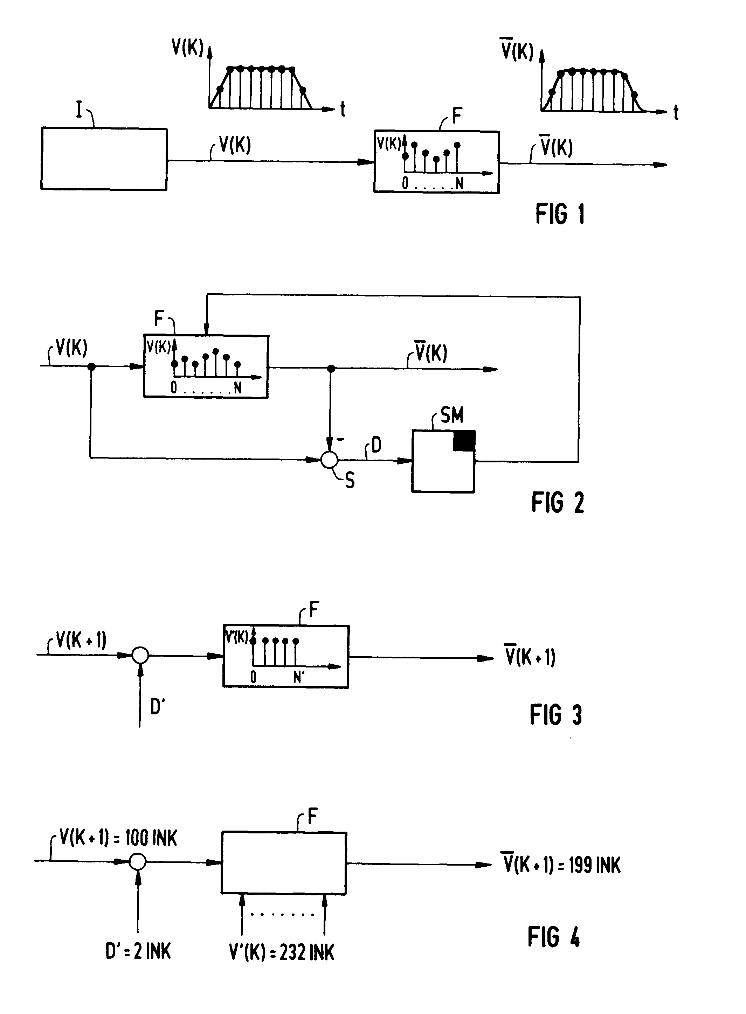

FIG 1 zeigt ein Blockschaltbild einer digitalen Filterung mit einem Interpolator I und einem Filter F. Der Interpolator I, der beispielsweise Bestandteil einer nicht dargestellten numerischen Steuerung sein kann, erzeugt an seinem Ausgang eine im Diagramm dargestellte Folge von digitalen Signalen als Geschwindigkeitssignale V(K). Mit diesen Geschwindigkeitssignalen V(K) soll eine Achse einer ebenfalls nicht dargestellten, numerisch steuerbaren Maschine, also beispielsweise eine Roboterachse, gesteuert werden. Da numerisch steuerbare Achsen in der Regel über inkrementelle Meßgeber verfügen, werden die Geschwindigkeitswerte V(K) als Anzahl von Weginkrementen pro Zeittakt ausgegeben. Im folgenden wird deshalb die Geschwindigkeit nicht in Meter pro Sekunden sondern in Inkrementen (INK) angegeben. Ein bestimmtes Geschwindigkeitssignal V(K) entspricht damit einem durch die Anzahl der Inkremente vorgegebenen Weg, den die numerisch gesteuerte Achse während eines Zeittaktes der numerischen Steuerung abzufahren hat.

Die Hüllkurve der Geschwindigkeitssignale V(K) die am Ausgang des Interpolators I erzeugt werden, ist unstetig. Um jedoch die Roboterachse möglichst mechanikschonend zu verfahren, wird ein "weiches" Geschwindigkeitsprofil angestrebt. Dazu wird das vom Interpolator I erzeugte Geschwindikgkeitsprofil V(K) über das digitale Filter F, das ein Mittelwertfilter sein kann, geführt, d.h. die Geschwindigkeitssignale V(K) werden als Eingangssignale V(K) auf das Filter gegeben. Das Filter F weist eine Anzahl von Speicherplätzen O... N zur Speicherung der Geschwindigkeitswerte $\overline{V}$(K) auf. Ein Ausgangssignal $\overline{V}$(K) des Filters F, d.h. ein gefilterter Geschwindigkeitswert $\overline{V}$(K) wird durch das Filter F erzeugt, indem die im Filter F gespeicherten Geschwindigkeitswerte V(K) addiert und durch die Summe der gespeicherten Geschwindigkeitswerte V(K) dividiert wird. Dieser Sachverhalt wird mathematisch durch Gleichung (1) beschrieben.

$$\overline{V}(K) = 1/N \sum_{i=0}^{N-1} (V(K-i)) \qquad\qquad (1)$$

Damit ergibt sich das am Ausgang des Filters F dargestellte Diagramm der gefilterten Geschwindigkeitssignale $\overline{V}$(K), dessen Hüllkurve einen stetigen Verlauf aufweist. Die Güte der Glättung, die durch das Filter F erreicht wird, hängt dabei von der Filterlänge N, d.h. von der Anzahl der Geschwindigkeitswerte V-(K) über die gemittelt wird, ab.

Um die Güte der Glättung an unterschiedliche Betriebsfälle von numerisch gesteuerten Achsen anzupassen, kann die Filterlänge N während des Betriebs, also während einer Verfahrbewegung der Achse, umgeschaltet werden. Bei einer Umschaltung von einer Filterlänge N auf eine neue Filterlänge N' ist jedoch sicherzustellen, daß der vom Interpolator I für die Achse vorgegebene Weg exakt abgefahren wird. Die dafür notwendigen Maßnahmen werden im folgenden anhand der FIG 2 näher erläutert.

FIG 2 zeigt das Signalflußdiagramm einer Filterung von digitalen Signalen. Auf den Eingang des Filters F wird eine Folge V(K) gegeben. Am Ausgang des Filters F wird dann zu jedem Wert V(K) ein gefilterter Wert $\overline{V}$(K) nach Gleichung (1) erzeugt. Bedingt durch die Filterung (Einschwingvorgänge etc.) weichen die Geschwindigkeitswerte V(K) in der Regel von den gefilterten Geschwindigkeitswerten $\overline{V}$(K) ab. Da am Ende der Filterung, also nach Durchlauf der Folge der Geschwindigkeitswerte V(K), eine durch die gefilterten Geschwindigkeitswerte $\overline{V}$(K) gesteuerte Maschinenachse jedoch genau den Weg abgefahren haben muß, der der Summe der Folge der vorgegebenen Geschwindigkeitswerte V(K) entspricht, wird über das Summationsglied S nach jeder Filterung die Signaldifferenz D, in diesem Falle als Geschwindigkeitsdifferenz D, nach Gleichung (2) ermittelt.

$$D = \sum_{i=0}^{K} (V(K) - \overline{V}(K)) \qquad\qquad (2)$$

Nach jeder Filterung bzw. Mittelwertbildung ist also am Ausgang des Summiergliedes S der noch nicht abgefahrene Weg der Maschinenachse abgreifbar. Dieser Weg, d.h. die Geschwindigkeitsdifferenz D, wird nach jeder Filterung in einem Speichermedium SM gespeichert.

Bei einer Umschaltung der Filterlänge N auf eine neue Filterlänge N' muß sichergestellt werden, daß der vom Interpolator I (FIG 1) für die zu steuernde Maschinenachse vorgegebene Weg exakt abgefahren wird, d.h., daß das modifizierte Filter F mit der geänderten Filterlänge N' (wobei N' größer oder kleiner sein kann als N) so vorzubesetzen ist, daß der noch nicht abgefahrene Weg, also die Geschwindigkeits- bzw. Signaldifferenz D, nicht verloren geht. Zur Erfüllung dieser Bedingung werden bei einer Umschaltung der Filterlänge N modifizierte Geschwindigkeitswerte V'(K) nach Gleichung 3 gebildet:

$$V'(K) = MOD\_2 \, INT \, (2 \times D/(N'-1)) \qquad (3)$$

Prinzipiell läßt sich der Wert der modifizierten Geschwindigkeitssignale $V'(K)$ lediglich aus der doppelten Signaldifferenz, dividiert durch die um den Faktor 1 reduzierte, geänderte Filterlänge $N'$ bestimmen. Die Anwendung der Modulo-Operation zur Basis 2 (MOD\_2) und der Integer-Funktion (INT) auf den Klammerausdruck von Gleichung (3) ist jedoch für numerische Steuerungen besonders vorteilhaft, da durch die Integer-Bildung Rundungsfehler vermieden werden und durch die Modulo-Operation zur Basis 2 eine später erforderliche Division durch den Faktor 2 mit einer einfachen Shift-Operation erreicht werden kann.

Die Speicherplätze des modifizierten Filters, deren Anzahl jetzt der geänderten Filterlänge $N'$ entspricht, werden jeweils mit dem nach Gleichung (3) berechneten modifizierten Geschwindigkeitswert $V'(K)$ vorbesetzt. Bedingt durch die Integer-Bildung ist jedoch der jetzt im Filter F gespeicherte Weg W, der sich aus der Summe der Geschwindigkeitswerte $V'(K)$ ergibt, noch verschieden von der Wegdifferenz D. Der im Filter gespeicherte Weg W läßt sich nach Gleichung (4) berechnen.

$$W = V'(K) \times (N' - 1)/2 \qquad (4)$$

Aus der bisherigen Weg- bzw. Geschwindigkeitsdifferenz D und dem jetzt im Filter gespeicherten Weg W ergibt sich eine zusätzliche Wegdifferenz D' die noch berücksichtigt werden muß um die Maschinenachse exakt zu verfahren. Diese zusätzliche Wegdifferenz wird nach Gleichung (5) bestimmt.

$$D' = D - W \qquad (5)$$

Die zusätzliche Signaldifferenz D' wird, wie in FIG 3 dargestellt, zu dem jeweils folgenden Geschwindigkeitssignal $V(K+1)$ addiert und auf den Eingang des Filters F gegeben.

Eine Umschaltung der Filterlänge sei im folgenden anhand eines Zahlenbeispiels erläutert. Das Filter F soll von einer Filterlänge von $N = 8$ auf eine Filterlänge von $N' = 4$ umgeschaltet werden. Es sei angenommen, daß die vom Interpolator I (FIG 1) erzeugte Folge von Geschwindigkeitswerten $V(K)$ konstant sei. Jeder Wert von $V(K)$ entspreche 100 Inkrementen pro Zeittakt, also $V(K) = 100$ INK.

Die am Summierglied S (FIG 2) abgreifbare bzw. im Speicher SM gespeicherte Wegdifferenz D läßt sich nach Gleichung (6) durch analoge Anwendung von Gleichung (4) bestimmen.

$$D = V(K) \times (N-1)/2 = 100 \, INK \times (8-1)/2 = 350 \, INK \qquad (6)$$

Gleichung 6 kann nur angewandt werden, wenn alle
$V(K) = V(K+1) = V(K+2) = \ldots$ identisch sind. Da dies in der Praxis selten der Fall ist, wird im Speicher SM ständig die Wegdifferenz D gebildet.

Die modifizierten Geschwindigkeitswerte $V'(K)$ für die geänderte Filterlänge $N'$ betragen dann nach Gleichung (3):

$$V'(K) = MOD\_2 \, INT \, (2 \times 350 \, INK/(4-1) = 232 \, INK \qquad (7)$$

Die vier Speicherplätze des neuen Filters mit der geänderten Filterlänge von $N' = 4$ werden nun mit den Geschwindigkeitswerten $V'(K)$ nach Gleichung (7), d.h. jeweils mit 232 Inkrementen vorbesetzt. Der im geänderten Filter gespeicherte Weg W läßt sich damit nach Gleichung (4) bestimmen.

$$W = V'(K) \times (N'-1)/2 = 232 \, INK \times (4-1)/2 = 348 \, INK \qquad (8)$$

Die zusätzliche Wegdifferenz nach Gleichung (5) ergibt sich damit zu

$$D' = D - W = 350 \, INK - 348 \, INK = 2 \, INK \qquad (9)$$

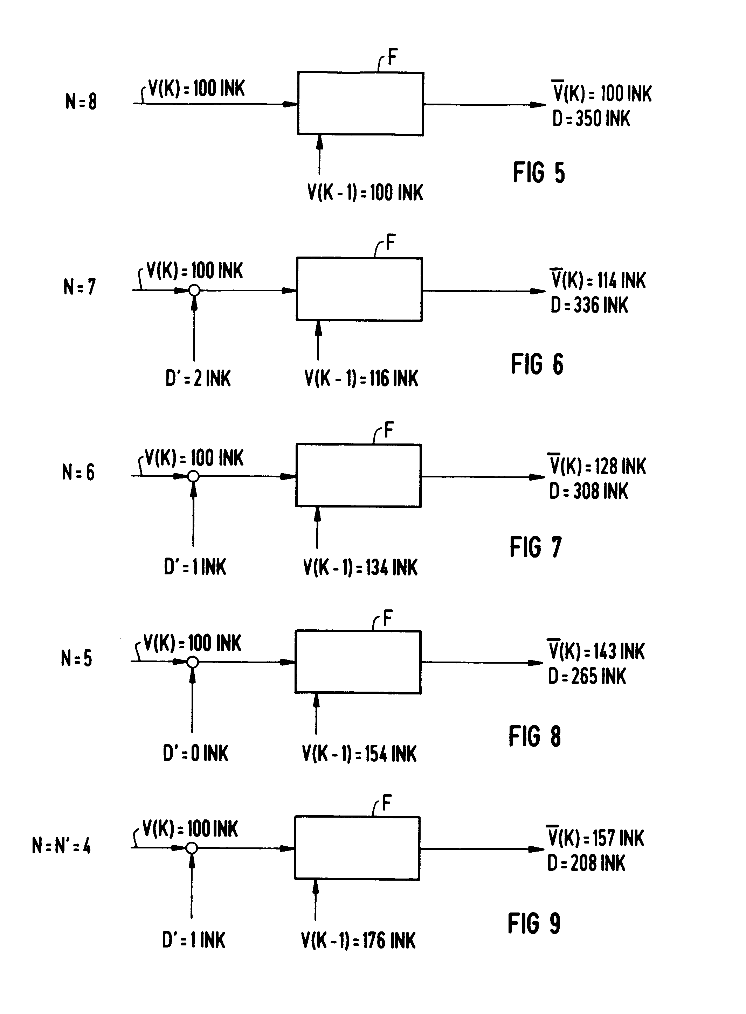

Diese zwei restlichen Inkremente werden - wie anhand der Beschreibung zu FIG 3 erläutert und in FIG 4 dargestellt - zum folgenden Geschwindigkeitssignal $V(K+1)$ addiert und auf den Eingang des Filters F gegeben.

Wie in FIG 4 dargestellt ergibt sich der erste Filterwert $\overline{V}(K+1)$ nach der Umschaltung des Filters aus drei modifizierten Geschwindigkeitssignalen $V'(K)$ mit jeweils 232 Inkrementen plus dem neuen Geschwindigkeitswert $V(K+1)$ und der zusätzlichen Wegdifferenz D' von 2 Inkrementen. Der gefilterte ganzzahlige Wert V(K + 1) entspricht damit 199 Inkrementen. Er läßt sich nach Gleichung (10) berechnen.

$$\overline{V}(K+1) = INT\ (3 \times 232\ INK + 100\ INK + 2\ INK)\ /4 = \qquad (10)$$
$$= 199\ INK$$

Wie aus dem Beispiel ersichtlich ist, erhöht sich der Ausgabewert $\overline{V}(K + 1)$ des Filters F bei einer Verkürzung der Filterlänge N und er verringert sich bei einer Verlängerung der Filterlänge N bis sich das Filter F jeweils wieder im eingeschwungenen Zustand befindet. Die Differenz zwischen $V(\overline{K})$ und $V(\overline{K} + 1)$ ist um so größer, je größer der Unterschied zwischen der vorhergehenden Filterlänge N und der geänderten Filterlänge N' ist.

Um bei einer Änderung der Filterlänge N einen Geschwindigkeitssprung möglichst gering zu halten, kann von der alten zur neuen Filterlänge N' schrittweise übergegangen werden. Um also beispielsweise von einer Filterlänge von N = 8 auf eine Filterlänge von N' = 4 umzuschalten, wird die Filterlänge schrittweise reduziert, d.h. das Filter wird von N = 8 auf N = 7, von N = 7 auf N = 6 usw. umgeschaltet, bis die neue Filterlänge von N' = 4 erreicht ist.

Diese schrittweise, bzw. sukzessive Umschaltung der Filterlänge N ist anhand der Figuren 5 bis 9 dargestellt. Die Zahlenangaben beziehen sich auf das oben angegebene Beispiel; die gefilterten Geschwindigkeitswerte $\overline{V}(K)$, die Signal- bzw. Wegdifferenz D und die zusätzliche Wegdifferenz D', werden analog zum oben angegebenen Beispiel berechnet. Es ist erkennbar, daß der jeweilige gefilterte Geschwindigkeitswert $\overline{V}(K)$ nach jeder Reduzierung der Filterlänge um den Faktor "Eins" nur geringfügig steigt. Selbstverständlich könnte eine schrittweise Umschaltung der Filterlänge N auch in Schritten erfolgen, die ein Vielfaches von Eins betragen.

Die Differenz der gefilterten Geschwindigkeitssignale $\overline{V}(K)$ bei einer jeweiligen Filterumschaltung kann zusätzlich überwacht werden, so daß ein nicht tolerierbarer Sprung der Gewschindigkeitswerte $\overline{V}(K)$ bei einer vorgesehenen Umschaltung der Filterlänge N erkannt wird und die Umschaltung der Filterlänge unterbleibt. Diese Möglichkeit kann sowohl bei einer sukzessiven Umschaltung der Filterlänge N, als auch bei einer direkten Umschaltung von einer gegebenen Filterlänge N auf eine neue Filterlänge N', vorgesehen werden.

**Patentansprüche**

1. Verfahren zur Filterung einer Folge von digitalen Eingangssignalen (V(K)), wobei in einem Filter (F) eine vorgebbare, der Filterlänge (N) entsprechende Anzahl von Eingangssignalen (V(K)) speicherbar ist, wobei ein Ausgangssignal ($\overline{V}$(K)) des Filters (F) aus der Summe der gespeicherten Eingangssignale (V-(K)), dividiert durch die Filterlänge (N), erzeugt wird und wobei jeweils die Signaldifferenz (D) der Eingangssignale (V(K)) und der Ausgangssignale ($\overline{V}$(K)) gebildet wird, mit folgenden weiteren Verfahrensschritten:

a) in einem Speichermittel (S) wird die jeweilige Signaldifferenz (D) gespeichert,

b) bei einer jeweiligen vorgebbaren Änderung der Filterlänge (N) werden im Filter (F) modifizierte digitale Signale (V'(K)) von jeweils gleichem Wert gespeichert, deren Anzahl der geänderten Filterlänge (N' ) entspricht,

c) der Wert der modifizierten digitalen Signale (V'(K)) wird aus der doppelten Signaldifferenz (D), dividiert durch die um den Faktor "Eins" reduzierte, geänderte Filterlänge (N'), ermittelt.

2. Verfahren nach Anspruch 1, **dadurch gekennzeichnet**, daß bei einer Änderung der Filterlänge (N) des Filters (F) jeweils der ganzzahlige Anteil der modifizierten digitalen Signale (V'(K) gespeichert wird, wobei eine dadurch bedingte zusätzliche Signaldifferenz (DZ) auf den Eingang des Filters (F) gegeben wird.

3. Verfahren nach Anspruch 2, **dadurch gekennzeichnet,** daß auf den ganzzahligen Anteil der modifizierten digitales Signale (V'(K)) eine Modulo-Operation zur Basis 2 angewendet wird.

4. Verfahren nach einem der vorstehenden Ansprüche, **dadurch gekennzeichnet**, daß eine Änderung von einer aktuellen Filterlänge (N) auf eine neue Filterlänge (N') schrittweise erfolgt.

5. Verfahren nach einem der vorstehenden Ansprüche, **dadurch gekennzeichnet,** daß eine aktuelle Filterlänge (N) beibehalten wird, wenn die Differenz zwischen zwei aufeinanderfolgenden Ausgangssignalen ($\overline{V}(K)$) bei einer vorgegebenen Änderung der Filterlänge (N) einen vorgegebenen Wert überschreitet.

6. Verfahren nach einem der Ansprüche 1 bis 4, **dadurch gekennzeichnet**, daß eine aktuelle Filterlänge (N) so geändert wird, daß die Differenz zwischen zwei aufeinanderfolgenden Ausgangssignalen $\overline{V}(K)$ einen vorgegebenen Wert nicht überschreitet.

FIG 1

FIG 2

FIG 3

FIG 4

N = 8    $V(K) = 100$ INK    F    $\overline{V}(K) = 100$ INK
                                   D = 350 INK

V(K - 1) = 100 INK

**FIG 5**

N = 7    $V(K) = 100$ INK    F    $\overline{V}(K) = 114$ INK
                                   D = 336 INK

D' = 2 INK    V(K - 1) = 116 INK

**FIG 6**

N = 6    $V(K) = 100$ INK    F    $\overline{V}(K) = 128$ INK
                                   D = 308 INK

D' = 1 INK    V(K - 1) = 134 INK

**FIG 7**

N = 5    $V(K) = 100$ INK    F    $\overline{V}(K) = 143$ INK
                                   D = 265 INK

D' = 0 INK    V(K - 1) = 154 INK

**FIG 8**

N = N' = 4    $V(K) = 100$ INK    F    $\overline{V}(K) = 157$ INK
                                       D = 208 INK

D' = 1 INK    V(K - 1) = 176 INK

**FIG 9**

**Europäisches Patentamt**

# EUROPÄISCHER RECHERCHENBERICHT

Nummer der Anmeldung

## EP 90 11 8609

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| A | US-A-4 603 286  (TESURO SAKANO)<br>* das ganze Dokument *<br>– – – | 1-6 | G 05 B 19/407 |
| A | EP-A-0 378 708  (FANUC LTD)<br>* Seite 3, Zeile 21 - Seite 8, Zeile 4; Figuren 1,2 *<br>– – – | 1 | |
| A | World Patent Index Latest, Derwent Publications LTD., London, GB; Accession Number: 87-207364-30, Derwent Week 8730;<br>& EP 0 229 926 (N.I.H.G.)<br>* Zusammenfassung *<br>– – – – – | 1 | |

| | RECHERCHIERTE SACHGEBIETE (Int. Cl.5) |
|---|---|
| | G 05 B |

Der vorliegende Recherchenbericht wurde für alle Patentansprüche erstellt

| Recherchenort | Abschlußdatum der Recherche | Prüfer |
|---|---|---|
| Den Haag | 27 Mai 91 | NETTESHEIM J.F. |